# EUROPEAN PATENT SPECIFICATION

(11) **EP 4 534 200 B1**
(45) Date of publication and mention of the grant of the patent: **04.11.2026**
(21) Application number: 23909359.4
(22) Date of filing: 15.09.2023
(51) Int. Cl.: B01J 29/80, C10G 45/64, B01J 35/30, B01J 35/00, B01J 29/85, B01J 29/00, B01J 8/02, B01J 29/70, B01J 29/65, B01J 29/40

(54) **GRADING METHOD FOR CATALYST AND PRODUCTION METHOD FOR BASE OIL**
KLASSIERUNGSVERFAHREN FÜR KATALYSATOR UND HERSTELLUNGSVERFAHREN FÜR BASISÖL
PROCÉDÉ DE FORMATION DE DÉGRADÉ POUR CATALYSEUR ET PROCÉDÉ DE PRODUCTION POUR HUILE DE BASE

(30) Priority: 30.12.2022 CN 202211733085
(43) Date of publication of application: 09.04.2025
(73) Proprietor: PetroChina Company Limited, Dongcheng District Beijing 100007 (CN)
(72) Inventor: YANG, Xiaodong, Beijing 100007 (CN); GAO, Yuxin, Beijing 100007 (CN); SUN, Famin, Beijing 100007 (CN); GUO, Jintao, Beijing 100007 (CN); ZHANG, Quanguo, Beijing 100007 (CN); LIU, Yanfeng, Beijing 100007 (CN); LU, Xuefeng, Beijing 100007 (CN); LIU, Wenyong, Beijing 100007 (CN); ZHAO, Tan, Beijing 100007 (CN); XIE, Bin, Beijing 100007 (CN)
(74) Representative: Vossius & Partner Patentanwälte Rechtsanwälte mbB
(86) International application number: PCT/CN2023/118993
(87) International publication number: WO 2024/139424

(56) References cited:
- EP-A1- 1 514 879
- CN-A- 1 380 251
- CN-A- 104 673 375
- CN-A- 106 554 820
- CN-A- 109 988 631
- CN-A- 114 471 681
- JP-A- 2016 084 474
- US-A1- 2013 260 985
- US-A1- 2015 158 018

## Description

### TECHNICAL FIELD

Embodiments of the present application relate to the technical field of catalysts, and, in particular, to a grading method of catalyst and a base oil production method.

### BACKGROUND

Lubricating oil can reduce the mechanical failure caused by friction and wear between mechanical parts. Therefore, with the rapid development of modem mechanical device and automobile industry, the market demand for lubricant base oil increases year by year. Converting paraffin oils into lubricant oils can realize the high added value of paraffin oil and bring great economic benefits. Generally, in the industry, hydroisomerization technology is mainly used to isomerize long-chain alkane molecules in the paraffin oil into isomeric alkane molecules with branched structures, which can improve the low-temperature fluidity performance of the oil while retaining its viscosity index.

For example, CN1524929A discloses a method for reducing a cloud point of a lubricant base oil. In this method, the lubricating oil material is first pre-dewaxed by a solvent so that the pour point of the dewaxed oil is lowered to -5°C to 15°C, then the pre-dewaxed oil is hydrotreated to reduce its sulfur and nitrogen contents, and the hydrotreated pre-dewaxed oil is isomerized and dewaxed to obtain a lubricant base oil with a low cloud point. In the solvent pre-dewaxing stage, traditional mixed solvent of ketone-benzene is applied, which has certain toxicity and an unfriendly operation environment; the dewaxing temperature is -10°C to 20°C, which requires low-temperature refrigeration device and high production cost. The feedstock oil contains impurity components such as sulfur and nitrogen, which needs to be removed by a hydrorefining process, thereby leading to a long process flow.

CN1690175A discloses a method for reducing the cloud point of a hydrodewaxed lubricant base oil. In the method, the raw material for hydrodewaxed lubricant base oil is mixed with a solvent and a deflocculant, cooled to -5°C to -30°C and filtered to give a filtrate. The resulting filtrate is a hydrodewaxed lubricant base oil with a lowered cloud point, in which the addition amount of the deflocculant accounts for 0.002%wt to 5%wt of the raw material oil. This method improves the filtration speed through the addition of the deflocculant, thereby making it easy to filter out wax particles obtained from the crystallization. However, the filtration is carried out at a low temperature of 5°C to -30°C, which also has the problem of requiring low temperature refrigeration device and high production cost.

CN111073698A discloses a production method of food-grade white oil having a low pour point and a low cloud point, in which a first catalyst, a second catalyst and a third catalyst are sequentially arranged from top to bottom in a hydrogenation reactor for isodewaxing and cloud point reduction; the first catalyst and the second catalyst are two different noble metal isodewaxing catalysts, and the reaction temperatures for the first, second and third catalysts are the same or moderately decreasing; and finally, the light component is removed by flash evaporation to obtain said food-grade white oil having a low pour point and a low cloud point.

CN99113304.8 proposes a method of tandem isomerization dewaxing, where a catalyst containing a molecular sieve with high silica content and low acidity and at least one Group VIII noble metal component is used in a first section, and a catalyst containing mesoporous SAPO-11 molecular sieve is used in a second section. By using a macroporous molecular sieve catalyst having low acidity in the first section, the isomerization reaction of wax molecules is carried out at higher temperature while maintaining a lower cracking activity, reducing the loading of the SAPO-11 catalyst in the second section, achieving a lowered pour point of the base oil and maintaining a higher yield of lubricant base oil.

CN1111073696A discloses a method of lowering a cloud point of a large viscosity lubricant base oil, where a first catalyst and a second catalyst are sequentially provided from top to bottom in a reaction device; said first catalyst and said second catalyst are two different noble metal isodewaxing catalysts; said lubricant base oil feedstock flows through the first catalyst and the second catalyst sequentially from top to bottom; the reaction temperature of the feedstock flowing through the second catalyst is smaller than the reaction temperature of the feedstock flowing through the first catalyst; and then after hydrofining, the product obtained from the bottom of the vacuum tower through atmospheric and vacuum fractionation is a lubricant base oil having low cloud and high viscosity.

It can be seen that there is still room for further improvement in the existing methods for producing base oils. Therefore, it is necessary to further grade the existing catalysts to increase the yield of the base oil and to improve the viscosity index, pour point and cloud point of the base oil.

JP2016084474A discloses a process for dewaxing a waxy hydrocarbon feedstock to form a lubricant oil; a catalyst system comprising a hydrotreating catalyst upstream of a dewaxing catalyst, used in the dewaxing of a waxy hydrocarbon feedstock to form a lubricant oil; and in particular, a process and catalyst system designed to maintain the lubricant oil product yield. Specifically, the lubricant oil yield does not decrease by more than 2%, at a target pour point, over a dewaxing temperature range. The hydrotreating catalyst helps prevent aging of the dewaxing catalyst and maintains the lubricant oil product yield at a target pour point over a wide temperature range. The hydrotreating catalyst comprises platinum, palladium or combinations thereof on a low acidity inorganic oxide support where acidity is evaluated by a decalin conversion of less than 10% at 700°F.

CN109988631A discloses a method for producing gasoline and base oil by a catalyst grading technology. The method comprises the following steps: a) under a hydrofining condition, mixing a heavy oil raw material with hydrogen, and allowing the mixture to flow through a reaction zone containing a hydrofining catalyst bed layer to perform a restrictive hydrofining reaction; b) allowing the reaction effluent obtained in the step a) to flow through a reaction zone containing a graded wax oil hydro-conversion catalyst bed layer to perform a hydro-conversion reaction under hydro-conversion process conditions; and allowing the reaction effluent to flow through a reaction zone containing a wax oil hydrocracking catalyst bed layer to perform a hydrocracking reaction under hydrocracking process conditions; and c) carrying out gas-liquid separation, fractionation and other processes on the reaction effluent obtained in the step b) to obtain converted gasoline, converted diesel oil and unconverted oil. The method provided by the invention can convert heavy distillate oil into gasoline and base oil, and provides an economically feasible route for processing of inferior raw materials and production of gasoline and base oil.

US2013260985A1 discloses a catalyst system for dewaxing a heavy hydrocarbon feedstock to form a lubricant base oil. A layered catalyst system of the present invention may comprise a first hydro isomerization dewaxing catalyst disposed upstream from a second hydroisomerization dewaxing catalyst. Each of the first and second hydroisomerization dewaxing catalysts may be selective for the isomerization of n-paraffins. The first hydroisomerization catalyst has a first level of selectivity for the isomerization of n-paraffins, the second hydroisomerization dewaxing catalyst has a second level of selectivity for the isomerization of n-paraffins, and a layered catalyst system comprising the first and second hydroisomerization dewaxing catalysts has a third level of selectivity for the isomerization of n-paraffins. The third level of selectivity may be higher than each of the first level of selectivity and the second level of selectivity.

### SUMMARY

The present application provides a grading method of catalyst. By grading the catalyst, it is possible to improve the catalytic effect, and then increase the yield of a base oil, and improve the viscosity index, pour point, and cloud point of the base oil. The present invention is set out in the appended set of claims.

The present application provides a grading method of catalyst, including a catalytic reaction unit, and a protective agent unit disposed before the catalytic reaction unit along a material flow direction.

In the catalytic reaction unit, along the material flow direction, a total acid content of the catalyst first increases and then decreases, and a molar content proportion of Brönsted acid in the catalyst first increases and then decreases.

In the material flow direction, the catalytic reaction unit includes a first catalyst layer and a second catalyst layer that are adjacent to each other in sequence, where a content of weak acid is greater than a content of medium-strong acid in the first catalyst layer, and the content of weak acid is less than the content of medium-strong acid in the second catalyst layer.

In the protective agent unit, along the material flow direction, an active metal content of a protective agent increases or remains constant; and a pore volume between protective agents decreases and a specific surface area of the protective agent increases.

According to the grading method of catalyst, the catalytic reaction unit further includes a third catalyst layer disposed after the second catalyst layer along the material flow direction.

The total acid content of the catalyst in the second catalyst layer is greater than that of the catalyst in the first catalyst layer and/or that of the catalyst in the third catalyst layer.

The molar content proportion of Brönsted acid in the second catalyst layer is greater than that of Brönsted acid in the first catalyst layer and/or that of Brönsted acid in the third catalyst layer.

The content of weak acid is less than the content of medium-strong acid in the third catalyst layer.

According to the grading method of catalyst, where the molar content proportion of Brönsted acid is 5% to 60% in at least one catalyst layer of the catalytic reaction unit.

According to the grading method of catalyst, where the molar content proportion of Brönsted acid is 10% to 50% in the at least one catalyst layer of the catalytic reaction unit.

According to the grading method of catalyst, where the total acid content of the catalyst is 50µmol/g to 300µmol/g in at least one catalyst layer of the catalytic reaction unit; preferably, the total acid content of the catalyst is 100µmol/g to 300µmol/g in the at least one catalyst layer of the catalytic reaction unit .

According to the grading method of catalyst, where the content of weak acid of the catalyst is 10µmol/g to 150µmol/g in at least one catalyst layer of the catalytic reaction unit; preferably, the content of weak acid of the catalyst is 20µmol/g to 100µmol/g in the at least one catalyst layer of the catalytic reaction unit; and/or
the content of medium-strong acid of the catalyst is 5µmol/g to 250µmol/g in at least one catalyst layer of the catalytic reaction unit; preferably, the content of medium-strong acid of the catalyst is 10µmol/g to 220µmol/g in the at least one catalyst layer of the catalytic reaction unit.

According to the grading method of catalyst, where, the protective agent unit includes a first protective agent layer and a second protective agent layer in sequence along the material flow direction.

The active metal content of the protective agent in the first protective agent layer is less than or equal to that of the protective agent in the second protective agent layer.

According to the grading method of catalyst, based on a total volume of the protective agent and the catalyst, a volume percentage of the protective agent is 2% to 20%; and/or
based on a total volume of the protective agent and the catalyst, a volume percentage of the catalyst is 80% to 98%.

According to the grading method of catalyst, based on the total volume of the protective agent and the catalyst, the volume percentage of the protective agent is 5% to 15%; and/or
based on the total volume of the protective agent and the catalyst, the volume percentage of the catalyst is 85% to 95%.

According to the grading method of catalyst, a mass percentage content of active metal in the protective agent is less than or equal to 5%.

The present application provides a base oil production method, including performing catalytic treatment on a feedstock oil by using the grading method of catalyst as mentioned above to obtain the base oil.

According to the base oil production method, the feedstock oil is selected from at least one of hydrocracking tail oil, paraffin-based wax oil, naphthenic wax oil, intermediate-based wax oil, foots oil or petroleum jelly.

According to the base oil production method, the feedstock oil has a sulfur content of ≤10µg/g, a nitrogen content of ≤5µg/g, and a distillation range of 300°C to 600°C.

The present application provides a grading method of catalyst, in which the catalyst is graded according to the acidity of the catalyst, effectively improving the catalytic effect, and increasing the yield of the base oil and the viscosity index of the base oil, reducing the low temperature performance of the base oil such as the pour point and the cloud point, and thus effectively improving the quality of the base oil.

### BRIEF DESCRIPTION OF DRAWINGS

In order to more clearly illustrate the technical solutions in the embodiments of the present application or the prior art, the following will briefly introduce the accompanying drawings required for describing the embodiments or the prior art. Obviously, the accompanying drawings in the following description are some of the embodiments of the present application, and persons of ordinary skill in the art may still derive other drawings from these accompanying drawings without paying creative effort.

FIG.1 shows a graph of the variation trend in a total acid content of a catalyst in a catalytic reaction unit along a material flow direction in some embodiments of the present application.

FIG.2 shows a graph of the variation trend in the total acid volume of the catalyst in the catalytic reaction unit along the material flow direction in other embodiments of the present application.

### DESCRIPTION OF EMBODIMENTS

To make the objectives, technical solutions, and advantages of embodiments of the present application clearer, the following clearly and comprehensively describes the technical solutions in embodiments of the present application with reference to the accompanying drawings in embodiments of the present application. Apparently, the described embodiments are merely a part rather than all embodiments of the present application. All other embodiments obtained by persons of ordinary skill in the art based on embodiments of the present application without creative effort shall fall within the protection scope of the present application.

In view of the above, the present application provides a grading method of catalyst, including a catalytic reaction unit, and a protective agent unit disposed before the catalytic reaction unit along the material flow direction.

In the catalytic reaction unit, the total acid content of the catalyst first increases and then decreases along the material flow direction; and the molar content of Brönsted acid of the catalyst first increases and then decreases.

In the material flow direction, the catalytic reaction unit includes a first catalyst layer and a second catalyst layer that are adjacent to each other in sequence. In the first catalyst layer, the content of weak acid is greater than the content of medium-strong acid; in the second catalyst layer, the content of weak acid is less than the content of medium-strong acid.

In the protective agent unit, the content of active metal in the protective agent increases or remains constant along the direction of material flow; the pore volume between the protective agents decreases and the specific surface area of the protective agent increases.

The catalyst of the present application may be a catalyst commonly used in the art. In some embodiments, the catalyst may contain a molecular sieve with a ten-member topological structure, and the molecular sieve may be one or more of ZSM-5, SAPO-11, ZSM-22, ZSM-35, ZSM-23, ZSM-48, and SAPO-41. In some embodiments, the catalyst may further contain an amorphous inorganic porous material, which may be selected from at least one of alumina, zirconium oxide, and titanium oxide; or one or more of composite oxides thereof (alumina-silica, alumina-zirconium oxide, zirconium oxide-titanium oxide, alumina-titanium oxide).

In the present application, based on the total mass of the catalyst, the mass percentage of the molecular sieve may be 40% to 80%; and further, based on the total mass of the catalyst, the mass percentage of the molecular sieve may be 55% to 75%. Based on the total mass of the catalyst, the mass percentage of the amorphous inorganic porous material may be 19% to 59.9%; and further, based on the total mass of the catalyst, the mass percentage of the amorphous porous material may be 25% to 50%.

In the catalysts of the present application, the active metal may be selected from one or more of Pt, Pd, Ru, and Ni; and further, the active metal may be selected from Pt and/or Pd. In some embodiments, based on the total mass of the catalyst, the mass percentage of the active metal is 0.1% to 1.0%; and further, based on the total mass of the catalyst, the mass percentage of the active metal is 0.2% to 0.5%.

The catalytic reaction unit of the present application may be provided with catalysts that are prepared from one type of molecular sieve and have different acid amounts, such as catalysts that are prepared from ZSM-22 molecular sieve and have different acid amounts; or catalysts that are prepared from different types of molecular sieves and have different acid amounts.

In the present application, the material may be selected from one or more of hydrocracking tail oil, paraffin-based wax oil, cycloalkane-based wax oil, intermediate-based wax oil, foots oil or petroleum jelly.

In the grading method of catalyst of the present application, the material can be mixed with hydrogen and then flow through the protective agent unit for removing impurity, the impurity-removed material then enters the catalytic reaction unit to carry out a reaction, and the reaction product generated in the catalytic reaction unit can enter a supplementary refining reactor or directly enter a fractionation device for base oil cutting to produce lubricant base oils of different viscosities.

Where, the reaction pressure is from 6MPa to 15MPa, the reaction temperature is from 300°C to 400°C, the volume space velocity is from 0.5 to 3.0, and the hydrogen-oil volume ratio is from 100 to 1000:1.

In the present application, by first removing impurity from the material and then carrying out the catalytic reaction, the material can be converted into the base oil to a greater extent, improving the yield of the base oil. Furthermore, the impurity content in the base oil can be reduced and the quality of the base oil can be improved. Where, the active metal in the protective agent can remove organic impurities (desulfurization and denitrification). The higher the content of the active metal in the protective agent, the stronger the ability of the protective agent to remove impurity (the stronger the ability of desulfurization and denitrification). In the present application, the active metal may be at least one of nickel, cobalt, molybdenum, and tungsten.

In the present application, two or more kinds of protective agents can be provided in the protective agent unit. The pore volume between the protective agents decreases gradually or decreases a stepwise manner along the material flow direction; and the specific surface area of the protective agent increases gradually or increases in a stepwise manner. The pore volume is capable of adsorbing inorganic impurities; and the larger the pore volume is, the stronger the adsorption capacity is.

Moreover, in the present application, the acid species in the catalyst may be divided into Brönsted acid and Lewis acid according to whether it can give protons and whether it can accept electron pairs. Where, Brönsted acid, also called proton acid, is an acid defined using the Brönsted acid-base proton theory. According to the Brönsted acid-base theory, a substance that is capable of giving protons is called as an acid, where the stronger its ability to give protons, the stronger its acidity. Lewis acid is an acid defined using the Lewis acid-base theory. According to the Lewis acid-base theory, a substance that has an empty orbital and is capable of accepting electron pairs is called as an acid, where the stronger its ability to accept electron pairs, the stronger its acidity.

In the present application, the molar contents of Brönsted acid and Lewis acid in the catalyst is determined using pyridine infrared spectroscopy (Py-IR) characterization method, where, the pyridine is adsorbed at the Brönsted acid center to form pyridine ions, with an infrared characteristic absorption peak in a range of 1530cm⁻¹ to 1560cm⁻¹, and the corresponding molar amount is the molar amount of Brönsted acid; the pyridine is adsorbed at the Lewis acid center, with an infrared characteristic absorption peak in a range of 1440cm⁻¹ to 1460cm⁻¹, and the corresponding molar amount is the molar amount of Lewis acid. The molar content proportion of Brönsted acid refers to the molar percentage of Brönsted acid based on the total molar amounts of Brönsted acid and Lewis acid.

In the present application, the acids in the catalyst are categorized into weak acid, medium-strong acid, and strong acid based on acid strength. Where, the content of the weak acid refers to the molar content of the weak acid, the content of the medium-strong acid refers to the molar content of the medium-strong acid, the content of the strong acid refers to the molar content of the strong acid, and the total acid content refers to the sum of the molar contents of the weak, medium-strong, and strong acids. In some embodiments, the molar contents of acids of various strengths in the catalyst as well as the total acid content is determined using an ammonia temperature-programmed desorption (NH₃-TPD) method. On the NH₃-TPD desorption diagram, the amount of ammonia desorbed between 100°C and 230°C corresponds to the content of weak acid, the amount of ammonia desorbed between 230°C and 370°C corresponds to the content of medium-strong acid, and the amount of ammonia desorbed above 370°C corresponds to the amount of strong acid. The specific operation method may include: blowing a catalyst sample with helium at 500°C for 1 hour and then lowering the temperature to 60°C, introducing ammonia-saturated vapor, and performing pulse adsorption for five times to reach the equilibrium; increasing the temperature to 100°C and blowing for 2 hours, and then programmedly elevating the temperature for ammonia desorption at a heating rate of 10°C/minute, and elevating the temperature to 650°C; absorbing the desorbed ammonia by a hydrochloric acid solution, and then titrating the excess hydrochloric acid with a sodium hydroxide solution, where the amount of hydrochloric acid consumed to absorb the ammonia is used for defining the contents of weak, medium-strong, and strong acid, and the total acid content of the catalyst, respectively.

It can be understood that in the present application, the content of the weak acid that contacts the material first is greater than the content of the medium-strong acid in the catalyst, and the content of the weak acid contacting the material later is less than the content of the medium-strong acid in the catalyst, and at the same time, the total acid content of the catalyst first increases and then decreases; and the molar content proportion of Brönsted acid in the catalyst first increases and then decreases.

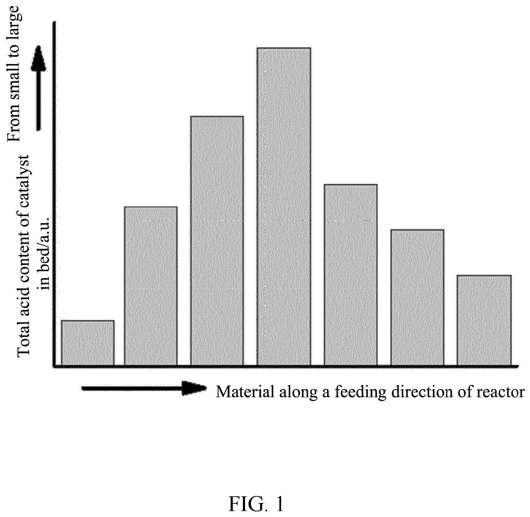

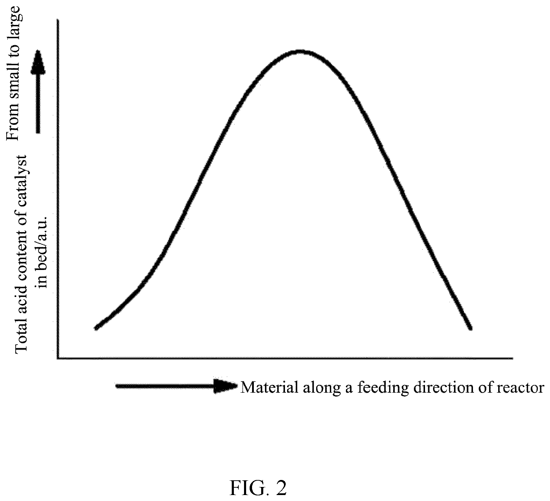

FIG.1 shows a graph of the variation trend in the total acid content of the catalyst in the catalytic reaction unit along the material flow direction in some embodiments of the present application. As shown in FIG. 1, in the present application, the total acid content of the catalyst along the material flow direction may show a gradient change, first increasing and then decreasing. FIG.2 shows a graph of the variation trend in the total acid content of the catalyst in the catalytic reaction unit along the material flow direction in some other embodiments of the present application. As shown in FIG.2, in the present application, the total acid content of the catalyst along the material flow direction may gradually increase and then gradually decrease.

In this application, by adjusting the number and strength of acid center (especially Brönsted acid) of the catalyst, the distribution of the product and the yield of the base oil can be effectively adjusted.

In this application, the protective agent and catalyst are reasonably graded, where along the material flow direction of material flow, the active metal content in the protective agent increases or remains unchanged, the pore volume between the protective agents decreases, and the specific surface area of the protective agent increases. The protective agent in the upper bed of the protective agent layer mainly has the capacity of physical adsorption of impurities, accompanied by the capacity of chemical desorption of a small amount of impurities. The capacity of chemical desorption of impurities in the lower protective agent layer is strengthened to completely remove the impurities from the material, avoiding the poisoning of the catalyst acid center and the metal active center in the catalyst layer and the clogging of the pore structure of the catalyst by impurities.

The catalyst is graded according to the total acid content and the acid strength of the catalyst, the upper part of the catalyst bed is loaded with a selective catalyst with a low total acid content and a high content proportion of weak acid, and the material undergoes an isomerization reaction at a low conversion rate, accompanied by a very small amount of cracking reaction, and a small part of the material undergoes isomerization reaction to produce isomeric alkanes. The middle part and lower middle part of the catalyst bed are loaded with a selective catalyst with a higher total acid content and a higher content proportion of medium-strong acid, and the increase of the total acid content and the increase of the content of medium-strong acid in the catalyst may allow the material to perform an isomerization reaction at a high conversion rate, and at the same time, intensify the cracking reaction of the material to produce some light products. At this time, most of the material undergoes isomerization reaction, converting into isomeric alkanes; and a small amount of the material undergoes the cracking reaction to generate light products. The rear of the catalyst bed is loaded with a catalyst having a total acid content lower than those of the middle part and lower-middle part of the catalyst bed, while having a reduced content of medium-strength acid; on the one hand, it can ensure that the remaining non-isomerized material is converted into iso-alkanes, and on the other hand, the reduction of the total acid content can reduce the generation of light oil products. Using the grading method of the present invention can effectively improve the catalytic effect of the material, thereby improving the yield of the base oil and the viscosity index of the base oil, lowering the pour point and cloud point of the base oil, and effectively improving the quality of the base oil.

In some embodiments of the present application, in the catalytic reaction unit, along the direction of material flow, there is further included a third catalyst layer provided after the second catalyst layer.

The total acid content of the catalyst in the second catalyst layer is greater than the total acid content of the catalyst in the first catalyst layer and/or the total acid content of the catalyst in the third catalyst layer.

The molar content proportion of Brönsted acid in the second catalyst layer is greater than that of Brönsted acid in the first catalyst layer and/or that of Brönsted acid in the third catalyst layer.

In the third catalyst layer, the content of weak acid is less than the content of medium-strong acid.

It is to be understood that the catalytic reaction unit of the present application may successively include a first catalyst layer, a second catalyst layer, and a third catalyst layer along the material flow direction.

It is to be understood that, in the present application, the total acid content of the catalyst in the first catalyst layer and the total acid content of the catalyst in the third catalyst layer may be the same or different, as long as it is possible to make the total acid content of the catalyst along the material flow direction increase first and then decrease. The molar content proportion of Brönsted acid in the first catalyst layer and the molar content proportion of Brönsted acid in the third catalyst layer may be the same or different, as long as it is possible to make the molar content proportion of Brönsted acid in the catalyst first increase and then decrease along the material flow direction.

By the above setting, the present application can further improve the catalytic effect of the catalyst, increase the yield of the base oil, and improve the viscosity index, the pour point and the cloud point of the base oil.

In the present application, the content of acid in the catalytic reaction unit can be further limited so as to further improve the catalytic efficiency of the catalyst, and improve the yield, viscosity index, pour point, and cloud point of the base oil.

In some embodiments of the present application, the molar content proportion of Brönsted acid in at least one catalyst layer of the catalytic reaction unit is 5% to 60%. Further, the molar content proportion of Brönsted acid in at least one catalyst layer of the catalytic reaction unit is 10% to 50%.

In some embodiments of the present application, in at least one catalyst layer of the catalytic reaction unit, the total acid content of the catalyst is 50mmol/g to 300mmol/g. Further, in at least one catalyst layer of the catalytic reaction unit, the total acid content of the catalyst is 100µmol/g to 300µmol/g.

In some embodiments of the present application, in at least one catalyst layer of in the catalytic reaction unit, the catalyst has a weak acid content of 10µmol/g to 150µmol/g; and/or
in at least one catalyst layer of the catalytic reaction unit, the catalyst has a medium-strong acid content of 5µmol/g to 250µmol/g.

Further, in at least one catalyst layer of the catalytic reaction unit, the catalyst has a weak acid content of 20µmol/g to 100µmol/g; and/or
in at least one catalyst layer of the catalytic reaction unit, the catalyst has a medium-strong acid content of 10µmol/g to 220µmol/g.

In the present application, the protective agent is graded in accordance with its impurity removal capacity, which can improve the impurity removal effect of the protective agent, thereby improving the catalytic effect of the catalytic reaction, and enhancing the yield and the quality of the base oil.

Exemplarily, in the protective agent unit, a first protective agent layer and a second protective agent layer are included in sequence along the material flow direction.

The active metal content of the protective agent in the first protective agent layer is less than or equal to the active metal content of the protective agent in the second protective agent layer.

In the present application, the content of the protective agent and the active metal content of the protective agent in the protective agent unit may be further selected, thereby better removing the impurities in the material, enhancing the catalytic efficiency, and improving the yield and the quality of the base oil.

In some embodiments of the present application, based on the total volume of the protective agent and the catalyst, the volume percentage of the protective agent is 2% to 20%.

It can be understood that, based on the total volume of the protective agent and the catalyst, the volume percentage of the catalyst is 80% to 98%.

Further, based on the total volume of the protective agent and the catalyst, the volume percent of the protective agent is 5% to 15% and the volume percent of the catalyst is 85% to 95%.

In some embodiments of the present application, the mass percent of active metal in the protective agent is less than or equal to 5%.

A second aspect of the present application provides a base oil production method, including: performing a catalytic treatment of a feedstock oil using the grading method of catalyst as described above to obtain the base oil.

Specifically, the feedstock oil can be catalytically treated under a hydrogen atmosphere through the catalyst bed of the above-described gradation to obtain a base oil with a low pour point, a low cloud point, and a high yield.

In some embodiments of the present application, the feedstock oil is selected from at least one of hydrocracking tail oil, paraffin-based wax oil, cycloalkane-based wax oil, intermediate-based wax oil, foots oil or petroleum jelly.

Further, the feedstock oil has a sulfur content of ≤10µg/g, a nitrogen content of≤ 5µg/g, and a distillation range of 300°C-600°C.

In the following, the technical solutions of the present application will be further described with reference to specific examples.

### Examples 1-3 and Comparative example 1-3

The grading methods of the catalysts of Examples 1-3 and Comparative example 1-3 are shown in Table 1.

**Table 1**

| | | Parameter | Example 1 | Example 2 | Example 3 | Comparative example 1 | Comparative example 2 | Comparative example 3 |
|---|---|---|---|---|---|---|---|---|
| Protectiv e agent unit | First protective agent | Pore volume/ mL/g | 0.75 | 0.72 | 0.76 | 0.72 | 0.72 | 0.76 |
| | | Specific surface area /m²/g | 95 | 112 | 87 | 112 | 112 | 87 |
| | | Active metal and content /wt% | None | None | None | None | None | None |
| | | Filling volume /vt% | 6 | 15 | 3 | 3 | 15 | 15 |
| | Second protective agent | Pore volume /ml/g | 0.53 | 0.51 | 0.58 | 0.51 | 0.72 | 0.58 |
| | | Specific surface area /m²/g | 152 | 164 | 145 | 164 | 112 | 145 |
| | | Active metal and content /wt% | Ni, 4 | Ni, 2; Mo,3 | Mo, 3 | Ni, 2; Mo, 3 | None | Mo, 3 |
| | | Filling volume /vt% | 4 | 5 | 2 | 2 | 5 | 5 |
| Catalytic reaction unit | Active metal Pt /wt% | | 0.4 | 0.2 | 0.1 | 0.4 | 0.2 | 0.2 |
| | Active metal Pd /wt% | | 0.1 | 0.1 | 0.3 | 0.1 | 0.1 | 0.1 |
| | First catalyst layer | Molecular sieve and proportion /wt% | SAPO-11, 53 | SAPO-11,40 | SAPO-41, 64 | ZSM-48, 65 | SAPO-11, 40 | ZSM-35, 80 |
| | | Amorphous inorganic material and proportion /wt% | ZrO₂, 46.5 | Al₂O₃, 59.7 | TiO₂, 35.6 | Al₂O₃, 34.6 | Al₂O₃, 59.7 | Al₂O₃-SiO₂, 19.7 |
| | | Total acid /µmol/g | 104 | 64 | 127 | 248 | 64 | 296 |
| | | Weak acid /µmol/g | 66 | 37 | 74 | 47 | 37 | 74 |
| | | Medium-strong acid /µmol/g | 28 | 15 | 31 | 161 | 15 | 205 |
| | | Brönsted acid /mol% | 10 | 6 | 16 | 44 | 6 | 57 |
| | | Filling volume/vt% | 30 | 20 | 10 | 30 | 20 | 30 |
| | Second catalyst layer | Molecular sieve and proportion /wt% | ZSM-22,70 | ZSM-35,80 | ZSM-23,75 | ZSM-48,65 | ZSM-5,45 | ZSM-5,45 |
| | | Amorphous inorganic material type and proportion /wt% | Al₂O₃-TiO₂, 29.5 | Al₂O₃-SiO₂, 19.7 | ZrO₂-TiO₂,24. 6 | Al₂O₃, 34.6 | Al₂O₃, 54.7 | Al₂O₃, 54.7 |
| | | Total acid /µmol/g | 253 | 296 | 277 | 248 | 205 | 205 |
| | | Weak acid /µmol/g | 54 | 74 | 68 | 47 | 47 | 47 |
| | | Medium-strong acid /µmol/g | 152 | 205 | 173 | 161 | 128 | 128 |
| | | Brönsted acid /mol% | 48 | 55 | 51 | 44 | 31 | 31 |
| | | Filling volume /vt% | 40 | 30 | 45 | 35 | 30 | 30 |
| | Third catalyst layer | Molecular sieve and proportion /wt% | ZSM-23,60 | ZSM-5,45 | ZSM-48,65 | ZSM-48,65 | ZSM-35,80 | SAPO-11,40 |
| | | Amorphous inorganic material and proportion /wt% | ZrO₂,39. 5 | Al₂O₃,54. 7 | Al₂O₃,34.6 | Al₂O₃,34.6 | Al₂O₃-SiO₂,19.7 | Al₂O₃,59.7 |
| | | Total acid /µmol/g | 223 | 205 | 248 | 248 | 296 | 64 |
| | | Weak acid /µmol/g | 53 | 47 | 47 | 47 | 74 | 37 |
| | | Medium-strong acid /µmol/g | 142 | 128 | 161 | 161 | 205 | 15 |
| | | Brönsted acid /mol% | 40 | 31 | 44 | 44 | 57 | 6 |
| | | Filling volume /vt% | 20 | 30 | 40 | 30 | 30 | 20 |

### Test example 1

According to the grading method of the catalyst in Table 1, under the hydrogenation process conditions shown in Table 2, the feedstock oil shown in Table 3 is catalyzed to obtain a catalytic product; and the boiling point of the catalytic product is cut to obtain a base oil having a fraction greater than 300°C, which is subjected to property analyses, and the results are shown in Table 4.

**Table 2**

| | |
|---|---|
| Isomerization dewaxing reactor temperature, °C | 370 |
| Reaction pressure, MPa | 12 |
| Liquid hourly space velocity, h⁻¹ | 1.2 |
| Hydrogen-oil volume ratio | 500 |

**Table 3**

| | | |
|---|---|---|
| Density (20°C), g/ml | | 0.8743 |
| Distillation range | HK, °C | 346 |
| | 50%, °C | 468 |
| | KK, °C | 552 |
| Sulfur, µg/g | | 9 |
| Nitrogen, µg/g | | 4 |
| Viscosity (100°C), mm²/s | | 8.9 |
| Viscosity index | | 137 |
| Aromatic content, wt% | | 6.3 |
| Freezing point, °C | | 34 |

| | | |
|---|---|---|
| Note: HK means an initial boiling point; KK means a final boiling point. | | |

**Table 4**

| Analysis items | Example 1 | Example 2 | Example 3 | Comparative example 1 | Comparative example 2 | Comparative example 3 |
|---|---|---|---|---|---|---|
| Sulfur, µg/g | 0.4 | 0.6 | 0.3 | 0.9 | 0.6 | 0.7 |
| Nitrogen, µg/g | 0.1 | 0.3 | <0.1 | 1.3 | 1.2 | 1.4 |
| Viscosity (100°C), mm²/s | 7.6 | 7.4 | 7.8 | 7.0 | 6.9 | 7.1 |
| Viscosity index | 124 | 122 | 127 | 117 | 115 | 112 |
| Pour point, °C | -21 | -18 | -24 | -10 | -12 | -9 |
| Cloud point, °C | -9 | -7 | -10 | -3 | -1 | -2 |
| Aromatic content, ω% | 0.3 | 0.4 | 0.2 | 1.1 | 0.7 | 0.8 |
| Total base oil yield, ω% | 95.5 | 93.2 | 94.7 | 91.3 | 86.5 | 88.4 |

As can be seen from Table 4, relative to Comparative example 1 to Comparative example 3, the grading method of catalyst in Example 1 to Example 3 of the present application can improve the yield of the base oil, and can effectively reduce the performance index the pour point and cloud point of the base oil, and the viscosity index of the base oil is higher, and the contents of sulphur and nitrogen in the product are lower, so that the quality of the base oil can be effectively improved.

### Test example 2

According to the grading method of catalyst in Table 1, under the hydrogenation conditions shown in Table 5, the feedstock oil shown in Table 6 is catalyzed to obtain a catalytic product, and the boiling point of the catalytic product is cut to obtain a base oil having a fraction greater than 300 °C, which is subjected to property analyses; and the results are shown in Table 7.

**Table 5**

| | |
|---|---|
| Isomerization dewaxing reactor temperature, °C | 350 |
| Reaction pressure, MPa | 8 |
| Liquid hourly space velocity, h⁻¹ | 1.5 |
| Hydrogen-oil volume ratio | 400 |

**Table 6**

| | | |
|---|---|---|
| Density (20°C), g/ml | | 0.8576 |
| Distillation range | HK, °C | 336 |
| | 50%, °C | 389 |
| | KK, °C | 514 |
| Sulfur, µg/g | | 7 |
| Nitrogen, µg/g | | 4 |
| Viscosity (100°C), mm²/s | | 4.6 |
| Viscosity index | | 145 |
| Freezing point, °C | | 23 |

**Table 7**

| Analysis items | Example 1 | Example 2 | Example 3 | Comparative example 1 | Comparative example 2 | Comparative example 3 |
|---|---|---|---|---|---|---|
| Sulfur, µg/g | 0.3 | 0.4 | 0.1 | 0.7 | 0.8 | 0.6 |
| Nitrogen, µg/g | <0.1 | 0.2 | <0.1 | 0.6 | 0.7 | 0.5 |
| Viscosity (100°C), mm²/s | 3.8 | 3.5 | 3.9 | 3.7 | 3.4 | 3.6 |
| Viscosity index | 128 | 122 | 129 | 119 | 115 | 114 |
| Pour point, °C | -21 | -19 | -24 | -11 | -14 | -12 |
| Cloud point, °C | -11 | -8 | -12 | -4 | -6 | -4 |
| Total base oil yield, ω% | 94.2 | 92.1 | 95.3 | 91.1 | 87.6 | 89.1 |

As can be seen from Table 7, relative to Comparative example 1 to Comparative example 3, the base oil produced by the grading method of catalyst in Example 1 to Example 3 of the present application has a higher yield, and lower sulfur and nitrogen contents, and the low temperature performance (pour point and cloud point) indexes of the base oil can be effectively reduced, and the base oil has higher viscosity index, which can effectively improve the quality of the base oil.

## Claims

1. A grading method of catalyst, comprising:
providing a catalytic reaction unit, and a protective agent unit, wherein the protective agent unit is disposed before the catalytic reaction unit along a material flow direction;
configuring the catalytic reaction unit such that a total acid content of the catalyst first increases and then decreases along the material flow direction in the catalytic reaction unit, and a molar content proportion of Brönsted acid of the catalyst first increases and then decreases in the catalytic reaction unit;
configuring the catalytic reaction unit to comprise a first catalyst layer and a second catalyst layer that are adjacent to each other in sequence in the material flow direction, wherein a content of weak acid is greater than a content of medium-strong acid in the first catalyst layer, and the content of weak acid is less than the content of medium-strong acid in the second catalyst layer;
configuring the protective agent unit such that, along the material flow direction, an active metal content of protective agents provided in the protective agent unit increases or remains constant, a pore volume between the protective agents decreases and a specific surface area of the protective agents increases,
wherein the content of weak acid and the content of medium-strong acid are determined by an ammonia temperature-programmed desorption method, and an amount of ammonia desorbed between 100°C-230°C corresponds to the content of weak acid, an amount of ammonia desorbed between 230°C-370°C corresponds to the content of medium-strong acid; and
the molar content proportion of Brönsted acid is determined by a pyridine infrared spectroscopy characterization method.

2. The grading method of catalyst according to claim 1, wherein the catalytic reaction unit further comprises a third catalyst layer disposed after the second catalyst layer along the material flow direction;
the total acid content of the catalyst in the second catalyst layer is greater than that of the catalyst in the first catalyst layer and/or that of the catalyst in the third catalyst layer;
the molar content proportion of Brönsted acid in the second catalyst layer is greater than that of Brönsted acid in the first catalyst layer and/or that of Brönsted acid in the third catalyst layer;
the content of weak acid is less than the content of medium-strong acid in the third catalyst layer.

3. The grading method of catalyst according to claim 1 or 2, wherein the molar content proportion of Brönsted acid is 5% to 60% in at least one catalyst layer of the catalytic reaction unit.

4. The grading method of catalyst according to claim 3, wherein the molar content proportion of Brönsted acid is 10% to 50% in the at least one catalyst layer of the catalytic reaction unit.

5. The grading method of catalyst according to any one of claims 1-4, wherein the total acid content of the catalyst is 50µmol/g to 300µmol/g in at least one catalyst layer of the catalytic reaction unit.

6. The grading method of catalyst according to claim 5, wherein the total acid content of the catalyst is 100µmol/g to 300µmol/g in the at least one catalyst layer of the catalytic reaction unit.

7. The grading method of catalyst according to any one of claims 1-6, wherein the content of weak acid of the catalyst is 10µmol/g to 150µmol/g in at least one catalyst layer of the catalytic reaction unit; and/or
the content of medium-strong acid of the catalyst is 5µmol/g to 250µmol/g in at least one catalyst layer of the catalytic reaction unit.

8. The grading method of catalyst according to claim 7, wherein the content of weak acid of the catalyst is 20µmol/g to 100µmol/g in the at least one catalyst layer of the catalytic reaction unit; and/or
the content of medium-strong acid of the catalyst is 10µmol/g to 220µmol/g in the at least one catalyst layer of the catalytic reaction unit.

9. The grading method of catalyst according to any one of claims 1-8, wherein the protective agent unit comprises a first protective agent layer and a second protective agent layer in sequence along the material flow direction;
the active metal content of the protective agent in the first protective agent layer is less than or equal to that of the protective agent in the second protective agent layer.

10. The grading method of catalyst according to any one of claims 1-9, wherein based on a total volume of the protective agent and the catalyst, a volume percentage of the protective agent is 2% to 20%; and/or
based on a total volume of the protective agent and the catalyst, a volume percentage of the catalyst is 80% to 98%.

11. The grading method of catalyst according to claim 10, wherein based on the total volume of the protective agent and the catalyst, the volume percentage of the protective agent is 5% to 15%; and/or
based on the total volume of the protective agent and the catalyst, the volume percentage of the catalyst is 85% to 95%.

12. The grading method of catalyst according to any one of claims 1-11, wherein a mass percentage content of active metal in the protective agent is less than or equal to 5%.

13. A base oil production method, comprising: performing catalytic treatment on a feedstock oil by using the grading method of catalyst according to any one of claims 1-12 to obtain the base oil.

14. The base oil production method according to claim 13, wherein the feedstock oil is selected from at least one of hydrocracking tail oil, paraffin-based wax oil, cycloalkane-based wax oil, intermediate-based wax oil, foots oil or petroleum jelly.

15. The base oil production method according to claim 13 or 14, wherein the feedstock oil has a sulfur content of ≤10µg/g, a nitrogen content of ≤5µg/g, and a distillation range of 300°C to 600°C.

## Patentansprüche

1. Verfahren zur Staffelung eines Katalysators, umfassend:
Bereitstellen einer katalytischen Reaktionseinheit und einer Schutzmitteleinheit, wobei die Schutzmitteleinheit in einer Materialflussrichtung vor der katalytischen Reaktionseinheit angeordnet ist;
Konfigurieren der katalytischen Reaktionseinheit derart, dass ein Gesamtsäuregehalt des Katalysators in der Materialflussrichtung in der katalytischen Reaktionseinheit zunächst zunimmt und dann abnimmt, und ein molarer Gehaltsanteil an Brönsted-Säure des Katalysators in der katalytischen Reaktionseinheit zunächst zunimmt und dann abnimmt;
Konfigurieren der katalytischen Reaktionseinheit derart, dass sie eine erste Katalysatorschicht und eine zweite Katalysatorschicht umfasst, die in der Materialflussrichtung nacheinander aneinander angrenzen, wobei ein Gehalt an schwacher Säure größer als ein Gehalt an mittelstarker Säure in der ersten Katalysatorschicht ist und der Gehalt an schwacher Säure kleiner als der Gehalt an mittelstarker Säure in der zweiten Katalysatorschicht ist;
Konfigurieren der Schutzmitteleinheit derart, dass in der Materialflussrichtung ein Gehalt an aktivem Metall von in der Schutzmitteleinheit bereitgestellten Schutzmitteln zunimmt oder konstant bleibt, ein Porenvolumen zwischen den Schutzmitteln abnimmt und eine spezifische Oberfläche der Schutzmittel zunimmt,
wobei der Gehalt an schwacher Säure und der Gehalt an mittelstarker Säure durch ein Verfahren der temperaturprogrammierten Ammoniak-Desorption bestimmt werden, und eine zwischen 100 °C und 230 °C desorbierte Ammoniakmenge dem Gehalt an schwacher Säure entspricht, eine zwischen 230 °C und 370 °C desorbierte Ammoniakmenge dem Gehalt an mittelstarker Säure entspricht; und
der molare Gehaltsanteil an Brönsted-Säure durch ein Charakterisierungsverfahren mittels Pyridin-Infrarotspektroskopie bestimmt wird.

2. Verfahren zur Staffelung eines Katalysators nach Anspruch 1, wobei die katalytische Reaktionseinheit ferner eine dritte Katalysatorschicht umfasst, die in der Materialflussrichtung nach der zweiten Katalysatorschicht angeordnet ist;
der Gesamtsäuregehalt des Katalysators in der zweiten Katalysatorschicht größer ist als derjenige des Katalysators in der ersten Katalysatorschicht und/oder derjenige des Katalysators in der dritten Katalysatorschicht;
der molare Gehaltsanteil an Brönsted-Säure in der zweiten Katalysatorschicht größer ist als derjenige an Brönsted-Säure in der ersten Katalysatorschicht und/oder derjenige an Brönsted-Säure in der dritten Katalysatorschicht;
der Gehalt an schwacher Säure kleiner ist als der Gehalt an mittelstarker Säure in der dritten Katalysatorschicht.

3. Verfahren zur Staffelung eines Katalysators nach Anspruch 1 oder 2, wobei der molare Gehaltsanteil an Brönsted-Säure in mindestens einer Katalysatorschicht der katalytischen Reaktionseinheit 5 % bis 60 % beträgt.

4. Verfahren zur Staffelung eines Katalysators nach Anspruch 3, wobei der molare Gehaltsanteil an Brönsted-Säure in der mindestens einen Katalysatorschicht der katalytischen Reaktionseinheit 10 % bis 50 % beträgt.

5. Verfahren zur Staffelung eines Katalysators nach einem der Ansprüche 1 bis 4, wobei der Gesamtsäuregehalt des Katalysators in mindestens einer Katalysatorschicht der katalytischen Reaktionseinheit 50 µmol/g bis 300 µmol/g beträgt.

6. Verfahren zur Staffelung eines Katalysators nach Anspruch 5, wobei der Gesamtsäuregehalt des Katalysators in der mindestens einen Katalysatorschicht der katalytischen Reaktionseinheit 100 µmol/g bis 300 µmol/g beträgt.

7. Verfahren zur Staffelung eines Katalysators nach einem der Ansprüche 1 bis 6, wobei der Gehalt an schwacher Säure des Katalysators in mindestens einer Katalysatorschicht der katalytischen Reaktionseinheit 10 µmol/g bis 150 µmol/g beträgt; und/oder
der Gehalt an mittelstarker Säure des Katalysators in mindestens einer Katalysatorschicht der katalytischen Reaktionseinheit 5 µmol/g bis 250 µmol/g beträgt.

8. Verfahren zur Staffelung eines Katalysators nach Anspruch 7, wobei der Gehalt an schwacher Säure des Katalysators in der mindestens einen Katalysatorschicht der katalytischen Reaktionseinheit 20 µmol/g bis 100 µmol/g beträgt; und/oder
der Gehalt an mittelstarker Säure des Katalysators in der mindestens einen Katalysatorschicht der katalytischen Reaktionseinheit 10 µmol/g bis 220 µmol/g beträgt.

9. Verfahren zur Staffelung eines Katalysators nach einem der Ansprüche 1 bis 8, wobei die Schutzmitteleinheit in der Materialflussrichtung nacheinander eine erste Schutzmittelschicht und eine zweite Schutzmittelschicht umfasst;
der Gehalt an aktivem Metall des Schutzmittels in der ersten Schutzmittelschicht kleiner oder gleich demjenigen des Schutzmittels in der zweiten Schutzmittelschicht ist.

10. Verfahren zur Staffelung eines Katalysators nach einem der Ansprüche 1 bis 9, wobei, bezogen auf ein Gesamtvolumen des Schutzmittels und des Katalysators, ein Volumenanteil des Schutzmittels 2 % bis 20 % beträgt; und/oder
bezogen auf ein Gesamtvolumen des Schutzmittels und des Katalysators ein Volumenanteil des Katalysators 80 % bis 98 % beträgt.

11. Verfahren zur Staffelung eines Katalysators nach Anspruch 10, wobei, bezogen auf das Gesamtvolumen des Schutzmittels und des Katalysators, der Volumenanteil des Schutzmittels 5 % bis 15 % beträgt; und/oder
bezogen auf das Gesamtvolumen des Schutzmittels und des Katalysators der Volumenanteil des Katalysators 85 % bis 95 % beträgt.

12. Verfahren zur Staffelung eines Katalysators nach einem der Ansprüche 1 bis 11, wobei ein Massenanteil an aktivem Metall in dem Schutzmittel kleiner oder gleich 5 % ist.

13. Verfahren zur Herstellung eines Grundöls, umfassend: Durchführen einer katalytischen Behandlung an einem Einsatzöl unter Verwendung des Verfahrens zur Staffelung eines Katalysators nach einem der Ansprüche 1 bis 12, um das Grundöl zu erhalten.

14. Verfahren zur Herstellung eines Grundöls nach Anspruch 13, wobei das Einsatzöl aus mindestens einem von Hydrocracking-Restöl, Wachsöl auf Paraffinbasis, Wachsöl auf Cycloalkanbasis, Wachsöl auf Mischbasis, Fußöl oder Vaseline ausgewählt ist.

15. Verfahren zur Herstellung eines Grundöls nach Anspruch 13 oder 14, wobei das Einsatzöl einen Schwefelgehalt von ≤ 10 µg/g, einen Stickstoffgehalt von ≤ 5 µg/g und einen Siedebereich von 300 °C bis 600 °C aufweist.

## Revendications

1. Procédé de gradation d'un catalyseur, comprenant :
fournir une unité de réaction catalytique et une unité d'agent de protection, dans lequel l'unité d'agent de protection est disposée avant l'unité de réaction catalytique selon une direction d'écoulement de matière;
configurer l'unité de réaction catalytique de telle sorte qu'une teneur en acide totale du catalyseur augmente d'abord puis diminue selon la direction d'écoulement de matière dans l'unité de réaction catalytique, et qu'une proportion de teneur molaire en acide de Brönsted du catalyseur augmente d'abord puis diminue dans l'unité de réaction catalytique;
configurer l'unité de réaction catalytique pour qu'elle comprenne une première couche de catalyseur et une deuxième couche de catalyseur qui sont adjacentes l'une à l'autre successivement selon la direction d'écoulement de matière, dans lequel une teneur en acide faible est supérieure à une teneur en acide moyennement fort dans la première couche de catalyseur, et la teneur en acide faible est inférieure à la teneur en acide moyennement fort dans la deuxième couche de catalyseur;
configurer l'unité d'agent de protection de telle sorte que, selon la direction d'écoulement de matière, une teneur en métal actif d'agents de protection prévus dans l'unité d'agent de protection augmente ou reste constante, un volume de pores entre les agents de protection diminue et une surface spécifique des agents de protection augmente,
dans lequel la teneur en acide faible et la teneur en acide moyennement fort sont déterminées par une méthode de désorption d'ammoniac à température programmée, et une quantité d'ammoniac désorbée entre 100 °C et 230 °C correspond à la teneur en acide faible, une quantité d'ammoniac désorbée entre 230 °C et 370 °C correspond à la teneur en acide moyennement fort; et
la proportion de teneur molaire en acide de Brönsted est déterminée par une méthode de caractérisation par spectroscopie infrarouge de la pyridine.

2. Procédé de gradation d'un catalyseur selon la revendication 1, dans lequel l'unité de réaction catalytique comprend en outre une troisième couche de catalyseur disposée après la deuxième couche de catalyseur selon la direction d'écoulement de matière;
la teneur en acide totale du catalyseur dans la deuxième couche de catalyseur est supérieure à celle du catalyseur dans la première couche de catalyseur et/ou à celle du catalyseur dans la troisième couche de catalyseur;
la proportion de teneur molaire en acide de Brönsted dans la deuxième couche de catalyseur est supérieure à celle en acide de Brönsted dans la première couche de catalyseur et/ou à celle en acide de Brönsted dans la troisième couche de catalyseur;
la teneur en acide faible est inférieure à la teneur en acide moyennement fort dans la troisième couche de catalyseur.

3. Procédé de gradation d'un catalyseur selon la revendication 1 ou 2, dans lequel la proportion de teneur molaire en acide de Brönsted est de 5 % à 60 % dans au moins une couche de catalyseur de l'unité de réaction catalytique.

4. Procédé de gradation d'un catalyseur selon la revendication 3, dans lequel la proportion de teneur molaire en acide de Brönsted est de 10 % à 50 % dans l'au moins une couche de catalyseur de l'unité de réaction catalytique.

5. Procédé de gradation d'un catalyseur selon l'une quelconque des revendications 1 à 4, dans lequel la teneur en acide totale du catalyseur est de 50 µmol/g à 300 µmol/g dans au moins une couche de catalyseur de l'unité de réaction catalytique.

6. Procédé de gradation d'un catalyseur selon la revendication 5, dans lequel la teneur en acide totale du catalyseur est de 100 µmol/g à 300 µmol/g dans l'au moins une couche de catalyseur de l'unité de réaction catalytique.

7. Procédé de gradation d'un catalyseur selon l'une quelconque des revendications 1 à 6, dans lequel la teneur en acide faible du catalyseur est de 10 µmol/g à 150 µmol/g dans au moins une couche de catalyseur de l'unité de réaction catalytique; et/ou
la teneur en acide moyennement fort du catalyseur est de 5 µmol/g à 250 µmol/g dans au moins une couche de catalyseur de l'unité de réaction catalytique.

8. Procédé de gradation d'un catalyseur selon la revendication 7, dans lequel la teneur en acide faible du catalyseur est de 20 µmol/g à 100 µmol/g dans l'au moins une couche de catalyseur de l'unité de réaction catalytique; et/ou
la teneur en acide moyennement fort du catalyseur est de 10 µmol/g à 220 µmol/g dans l'au moins une couche de catalyseur de l'unité de réaction catalytique.

9. Procédé de gradation d'un catalyseur selon l'une quelconque des revendications 1 à 8, dans lequel l'unité d'agent de protection comprend successivement une première couche d'agent de protection et une deuxième couche d'agent de protection selon la direction d'écoulement de matière;
la teneur en métal actif de l'agent de protection dans la première couche d'agent de protection est inférieure ou égale à celle de l'agent de protection dans la deuxième couche d'agent de protection.

10. Procédé de gradation d'un catalyseur selon l'une quelconque des revendications 1 à 9, dans lequel, sur la base d'un volume total de l'agent de protection et du catalyseur, un pourcentage volumique de l'agent de protection est de 2 % à 20 %; et/ou
sur la base d'un volume total de l'agent de protection et du catalyseur, un pourcentage volumique du catalyseur est de 80 % à 98 %.

11. Procédé de gradation d'un catalyseur selon la revendication 10, dans lequel, sur la base du volume total de l'agent de protection et du catalyseur, le pourcentage volumique de l'agent de protection est de 5 % à 15 %; et/ou
sur la base du volume total de l'agent de protection et du catalyseur, le pourcentage volumique du catalyseur est de 85 % à 95 %.

12. Procédé de gradation d'un catalyseur selon l'une quelconque des revendications 1 à 11, dans lequel une teneur en pourcentage massique en métal actif dans l'agent de protection est inférieure ou égale à 5 %.

13. Procédé de production d'une huile de base, comprenant: réaliser un traitement catalytique sur une huile de charge en utilisant le procédé de gradation d'un catalyseur selon l'une quelconque des revendications 1 à 12 pour obtenir l'huile de base.

14. Procédé de production d'une huile de base selon la revendication 13, dans lequel l'huile de charge est choisie parmi au moins l'un d'une huile résiduelle d'hydrocraquage, d'une huile de cire à base de paraffine, d'une huile de cire à base de cycloalcane, d'une huile de cire à base mixte, d'une huile de foots ou de la vaseline.

15. Procédé de production d'une huile de base selon la revendication 13 ou 14, dans lequel l'huile de charge présente une teneur en soufre ≤ 10 µg/g, une teneur en azote ≤ 5 µg/g et une plage de distillation de 300 °C à 600 °C.
